# EUROPÄISCHE PATENTSCHRIFT

(11) **EP 1 095 831 B1**
(45) Veröffentlichungstag und Bekanntmachung des Hinweises auf die Patenterteilung: **05.07.2006**
(21) Anmeldenummer: 00122767.7
(22) Anmeldetag: 19.10.2000
(51) Int. Cl.: B60S 5/06

(54) **Batteriewechselsystem für ein Flurförderzeug**
Battery exchange system for an industrial truck
Système de changement de batterie pour un chariot de manutention

(30) Priorität: 28.10.1999 DE 19952042
(43) Veröffentlichungstag der Anmeldung: 02.05.2001
(73) Patentinhaber: OM Carrelli Elevatori S.p.A., 20020 Lainate (MI) (IT)
(72) Erfinder: Hoock, Michael, 42100 Reggio Emilia (IT); Pizzetti, Lorenzo, 42042 Fabbrico (RE) (IT)
(74) Vertreter: Geirhos, Johann

(56) Entgegenhaltungen:
- DE-A- 2 444 711
- DE-A- 19 911 458
- US-A- 3 791 544
- US-A- 4 227 463
- US-A- 4 808 058
- US-A- 5 612 606

## Beschreibung

Die Erfindung betrifft ein Batteriewechselsystem für den Batteriewechsel eines Flurförderzeugs mit einem batterieelektrischen Antrieb, insbesondere eines Flurförderzeugs mit einer seitlich aus dem Flurförderzeug herausbewegbaren Batterie nach dem Oberbegriff des Anspruchs 1.

Als Flurförderzeug der genannten Art kommen beispielsweise Gegengewichtsgabelstapler, Schubstapler oder Lagertechnikgeräte in Betracht, die mit einer Batterie für den elektrischen Antrieb des Flurförderzeugs ausgerüstet sind. Die Batterie und verschiedene elektrische Aggregate befinden sich hierbei in einem Antriebsteil des Flurförderzeugs. Bei bestimmten Einsatzbedingungen des Flurförderzeugs ist es üblich, eine entladene Batterie regelmäßig durch eine aufgeladene Batterie auszuwechseln. Ein Auswechseln der Batterie ist ebenfalls bei einem Defekt der Batterie erforderlich.

Unabhängig von den oben beschriebenen Einsatzbedingungen des Flurförderzeugs besteht in jedem Fall das Bedürfnis, ein Auswechseln der Batterie mit möglichst geringem Aufwand zu ermöglichen. Hierzu sind Lösungen bekannt, bei denen die Batterie mit Hilfe einer Rollenbahn in seitlicher Richtung aus dem Flurförderzeug gezogen werden kann.

Für den seitlichen Batteriewechsel sind Batteriewechselsysteme bekannt, die für jedes Flurförderzeug einen auf die Abmessungen der Batterie abgestimmten Batteriewechselwagen aufweisen. Der Batteriewechselwagen weist ein Fahrgestell auf, beispielsweise mehrere Laufrollen, und kann mit einer Rollenbahn versehen sein. Zum Batteriewechsel kann somit die Batterie aus dem jeweiligen Flurförderzeug herausgeschoben und auf den Batteriewechselwagen geschoben werden. Mit dem Batteriewechselwagen kann die Batterie an eine entsprechend ausgebildete Ladestation transportiert und übergeben werden. Derartige Batteriewechselsysteme sind jedoch auf das jeweilige Flurförderzeug und somit die entsprechenden Abmessungen der Batterie abgestimmt. Zudem weist das Batteriewechselsystem durch einen speziellen Batteriewechselwagen einen hohen Bauaufwand auf.

Aus der US 4 808 058 ist ein Batteriewechselsystem mit einem Batteriewechselwagen bekannt, der von einem Gabenhubwagen und einer auf dem Gabelhubwagen angeordneten Batterieaufnahmeeinrichtung gebildet ist. Die Batterieaufnahmeeinrichtung ist mit einer von einem Schlitten, der mittels eines Hakens mit der Batterie in Verbindung bringbar ist, gebildeten Transporteinrichtung für die Batterie versehen, mit der während des Transport der Batterie durch den Gabelhubwagen die Batterie in Längsrichtung der Batterieaufnahmeeinrichtung gehalten wird. Die von dem Schlitten gebildete Transporteinrichtung, die die Funktion einer Halteeinrichtung zum Halten der Batterie in Längsrichtung der Batterieaufnahmeeinrichtung aufweist, weist jedoch einen hohen Bauaufwand auf und führt somit zu einer aufwändigen Batterieaufnahmeeinrichtung. Zudem ist aufgrund der von dem Haken gebildeten Verbindung des Schlittens mit der Batterie die Transporteinrichtung auf bestimmte Batterieabmessungen abgestimmt, wodurch die Batterieaufnahmeeinrichtung lediglich für bestimmte Batterieabmessungen eingesetzt werden kann und somit für unterschiedliche Batterien nicht geeignet ist.

Der vorliegenden Erfindung liegt daher die Aufgabe zugrunde, eine Batterieaufnahmeeinrichtung eines Batteriewechselsystems zur Verfügung zu stellen, die einen einfachen Aufbau aufweist und für unterschiedliche Batterien und somit Flurförderzeuge geeignet ist.

Diese Aufgabe wird erfindungsgemäß dadurch gelöst, dass die Halteeinrichtung einen Anschlag und einen vom Anschlag in Längsrichtung der Batterieaufnahmeeinrichtung beabstandeten, schwenkbaren Riegel aufweist, wobei eine Querverbindung der Batterieaufnahmeeinrichtung den Anschlag für die Batterie bildet und der Riegel an einem der Querverbindung in Längsrichtung der Batterieaufnahmeeinrichtung gegenüberliegenden Bereich angeordnet ist. Gemäß der Erfindung wird somit der Batteriewechselwagen von einer Batterieaufnahmeeinrichtung und einem Flurförderzeug, beispielsweise einem Gabelhubwagengebildet, wobei die Batterieaufnahmeeinrichtung eine Haltevorrichtung aufweist, die von einem an einer Querverbindung der Batterieaufnahmeeinrichtung angeordneten Anschlag und einem von dem Anschlag in Längsrichtung beabstandet angeordneten schwenkbaren Riegel gebildet ist. Dadurch wird für den Batteriewechselwagen ein geringer Bauaufwand erzielt, da ein bereits vorhandener Gabelhubwagen durch Hinzufügen der Batterieaufnahmeeinrichtung als Batteriewechselwagen verwendet werden kann. Ein derartiger aus der Batterieaufnahmeeinrichtung und dem Gabelhubwagen gebildeter Batteriewechselwagen kann auf einfache Weise für den Batteriewechsel von verschiedenen Flurförderzeugen, beispielsweise innerhalb einer Baureihe, und somit universell eingesetzt werden, da die Batterieaufnahmeeinrichtung für Batterien mit unterschiedlichen Abmessungen geeignet ist und der Gabelhubwagen höhenverstellbare Gabeln aufweist, wodurch bei verschiedenen Flurförderzeugen, die auf einen seitlichen Batteriewechsel ausgelegt sind, der Batteriewechselwagen auf einfache Weise an unterschiedliche Einbauhöhen der Batterien in den Flurförderzeugen angepasst werden kann. Durch die lösbare Befestigung der Batterieaufnahmeeinrichtung an dem Flurförderzeug sind zur Umwandlung des Flurförderzeugs in einen Batteriewechselwagen durch Hinzufügen der Batterieaufnahmeeinrichtung am Flurförderzeug keine Umbauarbeiten erforderlich. Dadurch ergibt sich eine doppelte Nutzungsmöglichkeit des Flurförderzeugs, da das Flurförderzeug ohne Batterieaufnahmeeinrichtung als Flurförderzeug mit uneingeschränkten Eigenschaften und durch einfaches Hinzufügen der Batterieaufnahmeeinrichtung als Batteriewechselwagen eingesetzt werden kann. Mit einem Anschlag und einem schwenkbaren Riegel kann erfindungsgemäß_auf einfache Weise eine Haltevorrichtung für die Batterie während des Transports gebildet werden, wobei an einer Querverbindung der Batterieaufnahmeeinrichtung auf einfache Weise ein Anschlag ausgebildet werden kann, beispielsweise indem die Querverbindung eine Höhe aufweist, die die Ebene der Rollenbahn übersteigt.

Das beispielsweise als Gabelhubwagen ausgebildete Flurförderzeug kann auf einfache Weise zum Batteriewechselwagen umgerüstet und somit als Batteriewechselwagen benutzt werden, wenn die Batterieaufnahmeeinrichtung auf die Gabeln eines Flurförderzeugs, insbesondere eines Gabelhubwagens, aufsteckbar ist. Durch Aufstecken auf die Gabeln kann die Batterieaufnahmeeinrichtung ohne Werkzeuge und ohne Umbauarbeiten am Flurförderzeug lösbar befestigt werden. Ein Gabelhubwagen, beispielsweise ein Palettenniederhubwagen, kann somit auf einfache Weise durch Aufstecken der beispielsweise als Rahmen ausgebildeten Batterieaufnahmeeinrichtung zum Batteriewechselwagen umgewandelt werden.

Mit besonderem Vorteil ist die Batterieaufnahmeeinrichtung auf den Gabeln des Flurförderzeugs mittels einer Sicherungseinrichtung gegen Verschieben in Querrichtung und/oder mittels einer Sicherungseinrichtung gegen Verschieben in Längsrichtung gesichert. Die Batterieaufnahmeeinrichtung ist somit gegen Verschieben auf den Gabeln des Gabelhubwagens gesichert, wodurch eine Batterie sicher auf dem von der Batterieaufnahmeeinrichtung und dem Gabelhubwagen gebildeten Batteriewechselwagen transportiert werden kann.

Gemäß einer Ausführungsform sind an einer Querverbindung der Batterieaufnahmeeinrichtung Zentrierflächen ausgebildet, die zwischen die Gabeln des Flurförderzeugs eingreifen. Durch zwischen die Gabeln des Gabelhubwagens eingreifende Zentrierflächen kann die Batterieaufnahmeeinrichtung auf einfache Weise in Querrichtung auf dem Gabelhubwagen gesichert werden.

Gemäß einer weiteren Ausführungsform ist an zumindest einer Längsstrebe der Batterieaufnahmeeinrichtung eine Lasche vorgesehen, die mit der Gabel in Wirkverbindung bringbar ist. Mit einer an einer Längsstrebe der Batterieaufnahmeeinrichtung angeordneten Lasche oder mehreren an den Längsstreben der Batterieaufnahmeeinrichtung angeordneten Laschen kann die Batterieaufnahmeeinrichtung auf einfache Weise in Querrichtung gesichert werden.

In einer Weiterbildung der Erfindung weist die Batterieaufnahmeeinrichtung mindestens einen Bolzen auf, der mit einer an der Gabel des Flurförderzeugs ausgebildeten Bohrung in Wirkverbindung bringbar ist. Mit einem an der Batterieaufnahmeeinrichtung angeordneten Bolzen, der bei auf den Gabeln des Flurförderzeugs aufgesteckter Batterieaufnahmeeinrichtung mit der in der Gabel angeordneten Bohrung in Verbindung steht, kann die Batterieaufnahmeeinrichtung auf einfache Weise auf den Gabeln des Gabelhubwagens in Längsrichtung und in Querrichtung gesichert werden.

Zweckmäßigerweise ist die Bohrung an der Spitze der Gabel des Flurförderzeugs angeordnet. An der Spitze der Gabel des Flurförderzeugs kann die Bohrung mit geringem Aufwand angeordnet werden, wobei durch die Bohrung die Stabilität der Gabel und somit die Tragfähigkeit des Flurförderzeugs nicht verringert wird.

Gemäß einer Ausführungsform ist das Flurförderzeug mit einer Feststelleinrichtung versehen. Dadurch kann auf einfache Weise ein Wegrutschen des mit der Batterieaufnahmeeinrichtung versehenen Flurförderzeugs während des Batteriewechsels vermieden werden.

Bei einem motorbetriebenen Flurförderzeug, das durch Hinzufügen der Batterieaufnahmeeinrichtung als Batteriewechselwagen verwendet wird, kann die bereits vorhandene Feststellbremseinrichtung als Feststelleinrichtung während des Batteriewechsels verwendet werden. Für ein als Handgabelhubwagen ausgebildetes, als Batteriewechselwagen verwendetes Flurförderzeug, ergibt sich ein geringer Bauaufwand, wenn die Feststelleinrichtung auf ein gelenktes Rad des Flurförderzeugs wirkt und als schwenkbarer Hebel mit einem an dem Hebel angeordneten Feststellklotz ausgebildet ist, der mit dem Rad in Wirkverbindung bringbar ist.

Gemäß einer Weiterbildung der Erfindung weist das Batteriewechselsystem eine Ladestation auf, die von einer Batterieaufnahmeeinrichtung gebildet ist, die mittels Stützelemente am Boden abgestützt ist. Durch eine mittels Stützelementen auf dem Boden abgestützten Batterieaufnahmeeinrichtung kann auf einfache Weise eine Ladestation gebildet werden, wobei mittels des aus der Batterieaufnahmeeinrichtung und dem Gabelhubwagen gebildeten Batteriewechselwagens die Batterie an die Ladestation transportiert und auf einfache Weise auf die Ladestation geschoben werden kann.

Sofern die auf den Gabelhubwagen aufsteckbare Batterieaufnahmeeinrichtung und die die Ladestation bildende Batterieaufnahmeeinrichtung einen im wesentlichen gleichen Aufbau aufweisen, ergibt sich ein hoher Gleichteileanteil, wodurch die Ladestation mit geringem Aufwand herstellbar ist.

Eine einfache Abstützung der Batterieaufnahmeeinrichtung auf dem Boden ergibt sich, wenn die die Ladestation bildende Batterieaufnahmeeinrichtung mittels zweier Stützelemente, insbesondere zweier Vierkantrohre, am Boden abgestützt ist.

Zweckmäßigerweise ist die Batterieaufnahmeeinrichtung mit einer Rollenbahn versehen. Die Batterieaufnahmeeinrichtung des Batterietransportwagens und die Batterieaufnahmeeinrichtung der Ladestation sind somit jeweils mit einer Rollenbahn versehen. Die Batterie kann somit auf einfache Weise von dem Flurförderzeug auf den Batterietransportwagen und vom Batterietransportwagen auf die Ladestation und in umgekehrter Richtung von der Ladestation auf den Batterietransportwagen und von diesem in das Flurförderzeug bewegt werden.

Ein universeller Einsatz für verschiedene Batterien mit unterschiedlichen Abmessungen ist auf einfache Weise möglich, wenn der Riegel an der Batterieaufnahmeeinrichtung längsverschiebbar angeordnet ist. Dadurch kann der Anschlag auf verschiedene Batterielängen eingestellt werden.

Ein einfacher Aufbau für einen längsverschiebbaren Riegel ergibt sich, wenn der Riegel auf einer in Längsrichtung der Batterieaufnahmeeinrichtung angeordneten Welle längsverschiebbar gelagert ist.

Sofern für den Riegel in Längsrichtung der Batterieaufnahmeeinrichtung mindestens eine Arretierungsposition vorgesehen ist, können mittels des Riegels unterschiedlich lange Batterien auf der Batterieaufnahmeeinrichtung sicher gehalten werden.

Die Arretierungspositionen können auf einfache Weise durch an einer Längsstrebe der Batterieaufnahmeeinrichtung angeordnete Aussparungen gebildet und hergestellt werden.

Die Batterie kann auf der Batterieaufnahmeeinrichtung in Querrichtung sicher gehalten werden, wenn die Längsstreben der Batterieaufnahmeeinrichtung eine Halteeinrichtung zum Halten der Batterie in Querrichtung aufweisen

Zweckmäßigerweise sind hierfür an den Längsstreben der Batterieaufnahmeeinrichtung Seitenbleche angeordnet, die eine Halteeinrichtung zum Halten der Batterie in Querrichtung bilden. Sofern die Seitenbleche eine Höhe aufweisen, die die Ebene der Rollenbahn übersteigt, kann auf einfache Weise die Batterie in Querrichtung gesichert werden.

Die Batterie kann auf einfache Weise aus dem Flurförderzeug auf den Batteriewagen und von diesem auf die Ladestation sowie von der Ladestation auf den Batteriewechselwagen bewegt werden, wenn an der Batterieaufnahmeeinrichtung Führungseinrichtungen für die Batterie angeordnet sind. Hierdurch wird eine Zentrierung der Batterie auf der Rollenbahn und eine leichte Übergabe der Batterie auf die Rollenbahn ermöglicht, wodurch keine exakte Positionierung des Batteriewechselwagens an dem Flurförderzeug bzw. an der Ladestation erforderlich ist.

Zweckmäßigerweise sind hierzu die Seitenbleche an einem dem Ende der Batterieaufnahmeeinrichtung zugewandten Ende mit einer Abrundung versehen. Dadurch können auf einfache Weise Führungseinrichtungen für die Batterie gebildet werden, die eine Zentrierung der Batterie bei der Übergabe der Batterie auf die Batterieaufnahmeeinrichtung ermöglichen.

Ein einfacher Aufbau und eine einfache Herstellung der Batterieaufnahmeeinrichtung ergibt sich, wenn die Batterieaufnahmeeinrichtung als Schweißteil ausgebildet ist.

Weitere Vorteile und Einzelheiten werden anhand der in den schematischen Figuren dargestellten Ausführungsbeispiele näher erläutert. Dabei zeigt
- Figur 1: eine erste Ausführungsform einer Batterieaufnahmeeinrichtung für einen Batteriewechselwagen,
- Figur 2: eine erste Ausführungsform eines Batteriewechselwagens,
- Figur 3: eine erste Ausführungsform einer Ladestation,
- Figur 4: eine zweite Ausführungsform einer Batterieaufnahmeeinrichtung für einen Batteriewechselwagen,
- Figur 5: eine zweite Ausführungsform eines Batteriewechselwagens und
- Figur 6: eine zweite Ausführungsform einer Ladestation,
- Figur 7a: einen Gabelhubwagen eines Batteriewechselwagens in einer Draufsicht,
- Figur 7b: einen Gabelhubwagen eines Batteriewechselwagens in einer Seitensicht,
- Figur 8a: eine Feststelleinrichtung für einen Gabelhubwagen in einer Seitenansicht und
- Figur 8b: eine Festelleinrichtung für einen Gabelhubwagen in einer Draufsicht.

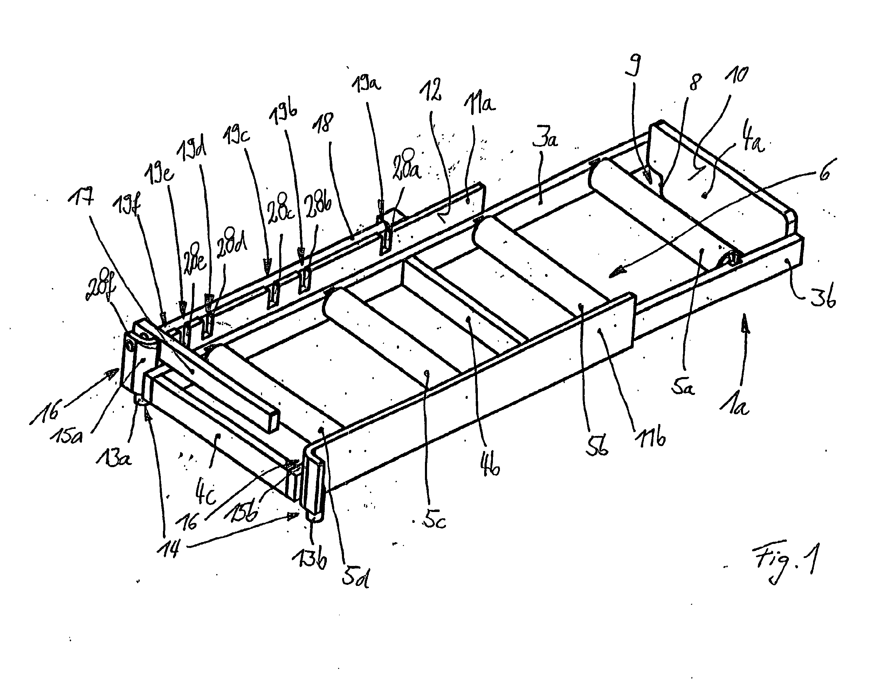

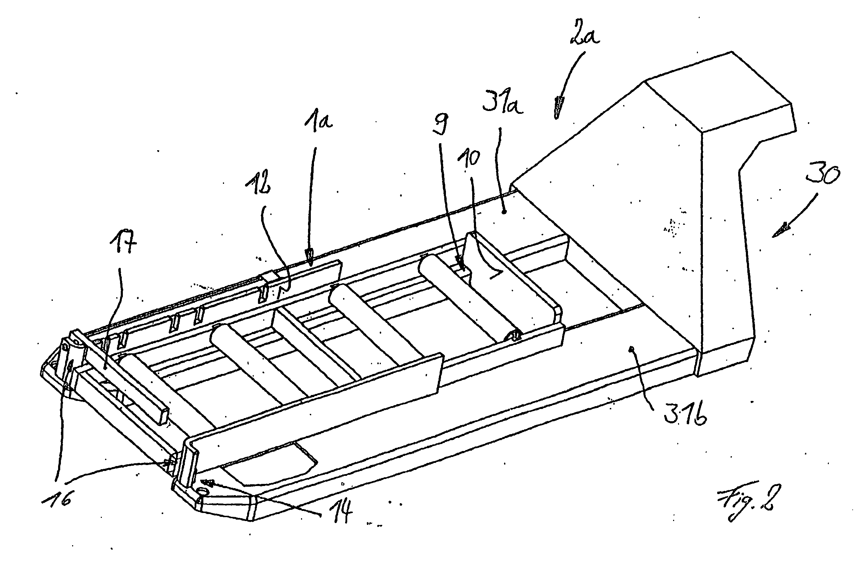

Die Figur 1 zeigt eine erste Ausführungsform einer Batterieaufnahmeeinrichtung 1a für einen Batteriewechselwagen 2a, der in der Figur 2 schematisch gezeigt ist. Die als Rahmen ausgebildete Batterieaufnahmeeinrichtung 1a weist zwei voneinander beabstandete Längsstreben 3a, 3b auf, die mittels Querverbindungen 4a, 4b, 4c verbunden sind, beispielsweise durch Schweißen. An den Längsstreben 3a, 3b sind mehrere parallel zu den Querverbindungen 4a, 4b, 4c angeordnete Rollen 5a, 5b, 5c 5d drehbar gelagert, die eine Rollenbahn 6 bilden.

Die im vorderen Bereich der Batterieaufnahmeeinrichtung 1a angeordnete Querverbindung 4a ist im Bereich der Längsstrebe 3a, 3b mit jeweils einer Aussparungen versehen, wodurch Zentrierflächen 8 gebildet werden, die - wie aus der Figur 2 zu sehen ist - bei auf den Gabeln 31a, 31b des Gabelhubwagens 30 aufgesteckter Batterieaufnahmeeinrichtung 1a an den Innenflächen der Gabeln 30a, 30b anliegen und somit zwischen die Gabeln 31 a, 31b eingreifen, wodurch eine Sicherungseinrichtung 9 gegen Verschieben der Batterieaufnahmeeinrichtung 1a in Querrichtung relativ zum Gabelhubwagen 30 gebildet wird.

Die Querverbindung 4a bildet weiterhin einen Anschlag 10 für eine auf der Rollenbahn 6 befindliche Batterie. Hierzu weist die Querverbindung 4a eine Höhe auf, die die Ebene der Rollenbahn 6 übersteigt.

An den Längsstreben 3a, 3b ist jeweils ein Seitenblech 11a, 11b angeordnet. Die Seitenbleche 11a, 11b weisen eine Höhe auf, die die Ebene der Rollenbahn 6 übersteigt. Dadurch wird von den Seitenblechen 11a, 11b eine Halteeinrichtung 12 zur Begrenzung der Bewegung einer auf der Rollenbahn 6 angeordneten Batterie in Querrichtung begrenzt.

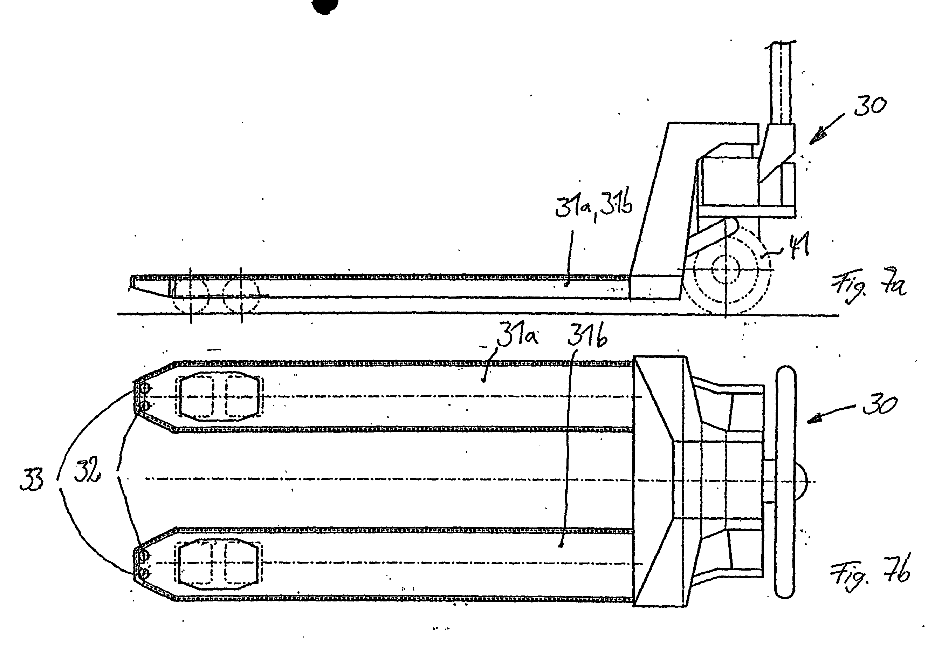

An den Seitenblechen 11a, 11b ist jeweils ein Bolzen 13a, 13b angeordnet, der in Verbindung mit jeweils einer an den Gabeln 31a, 31b des Gabelhubwagens 30 angeordneten Bohrung 32 - wie aus der Figur 7b zu entnehmen ist - eine Sicherungseinrichtung 14 gegen Verschieben der Batterieaufnahmeeinrichtung 1a relativ zum Gabelhubwagen in Querrichtung und gegen Verschieben der Batterieaufnahmeeinrichtung 1a relativ zum Gabelhubwagen in Längsrichtung bildet Die Bolzen 13a, 13b sind hierbei im Bereich der der Querverbindung 4a gegenüberliegenden Querverbindung 4c an der Batterieaufnahmeeinrichtung 1a angeordnet.

Die der Querverbindung 4c zugewandten Enden der Seitenbleche 11 a, 11 b sind mit einer nach Außen führenden Abrundung 15a, 15a versehen, wodurch Führungseinrichtungen 16 für eine Batterie gebildet werden, die eine leichte Aufnahme der Batterie auf der Rollenbahn 6 der Batterieaufnahmeeinrichtung 1a ermöglichen.

An dem Seitenblech 11a ist ein Riegel 17 schwenkbar angeordnet, der zusammen mit dem Anschlag 10 eine Haltevorrichtung für eine auf der Rollenbahn 6 angeordnete Batterie bildet. Der Riegel 17 ist hierbei auf einer Welle 18 längsverschiebbar und schwenkbar gelagert, wobei die Welle 18 in Längsrichtung der Batterieaufnahmeeinrichtung 1a an dem Seitenblech 11a angeordnet ist. An dem Seitenblech 11a sind mehrere Arretierungspositionen 19a, 19b, 19c, 19d, 19e, 19f für den Riegel 17 vorgesehen, die jeweils von einer in dem Seitenblech 11 a ausgebildeten Ausnehmung 28a, 28b, 28c, 28d, 28e, 28f gebildet sind. Durch entsprechendes verschieben des Riegels 17 entlang der Welle 18 und Arretieren in einer der Arretierungspositionen 19a, 19b, 19c, 19d, 19e, 19f können somit Batterien mit unterschiedlichen Längen auf der Batterieaufnahmeeinrichtung 1a sicher gehalten werden.

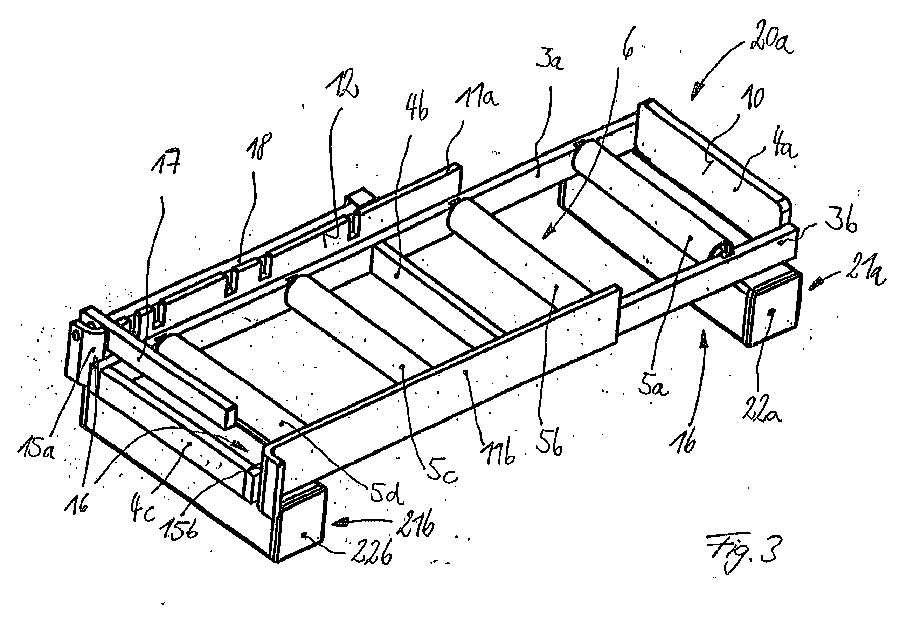

In der Figur 3 ist eine Ausführungsform einer Ladestation 20a gezeigt. Die Ladestation 20a weist eine rahmenförmige Batterieaufnahmeeinrichtung 1b auf, die einen im wesentlichen identische Aufbau mit der Batterieaufnahmeeinrichtung 1a des Batteriewechselwagens 2a hat und aus den Längsstreben 3a, 3b, den Querverbindungen 4a, 4b, 4c, den Rollen 5a, 5b, 5c, 5d und den Seitenblechen 11a, 11b mit dem auf der Welle 18 zwischen den verschiedenen Arretierungspositionen verschiebbaren und schwenkbaren Riegel 17 besteht. Ein Unterschied der Batterieaufnahmeeinrichtung 1b zur Batterieaufnahmeeinrichtung 1a besteht lediglich dahingehend, daß an den Seitenblechen 11a, 11b keine Bolzen 11a, 11b angeordnet sind. Zudem kann an der Querverbindung 4a auf die Zentrierflächen 8 verzichtet werden.

Die Batterieaufnahmeeinrichtung 1b ist mit zwei Stützelementen 21a, 21b verbunden, beispielsweise mittels Schweißen, die eine Abstützung der Batterieaufnahmeeinrichtung 1b auf dem Boden ermöglichen. Die Stützelemente 21a, 21b sind beispielsweise als Vierkantrohre 22a, 22b ausgebildet.

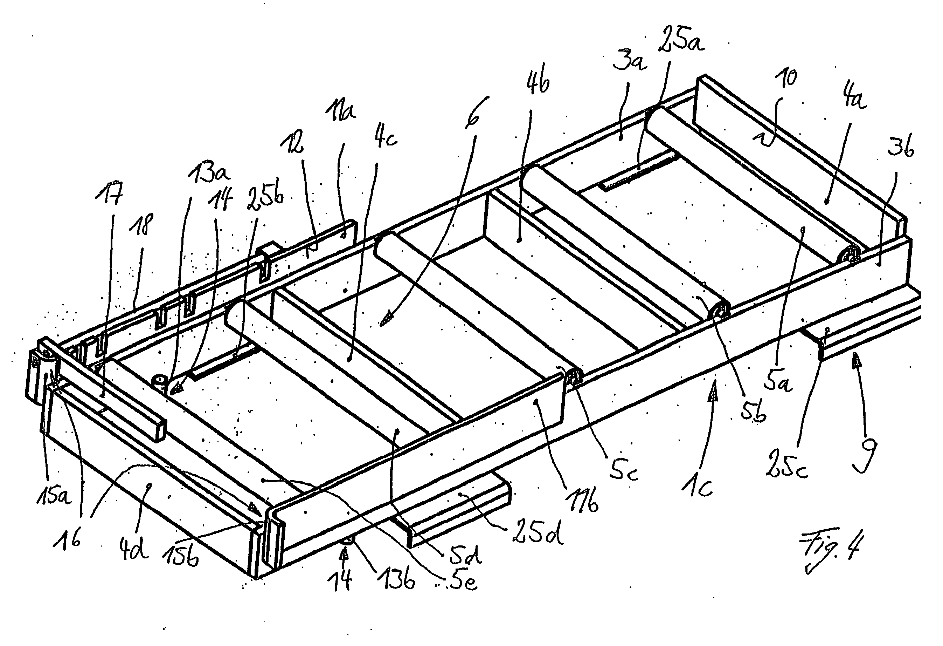

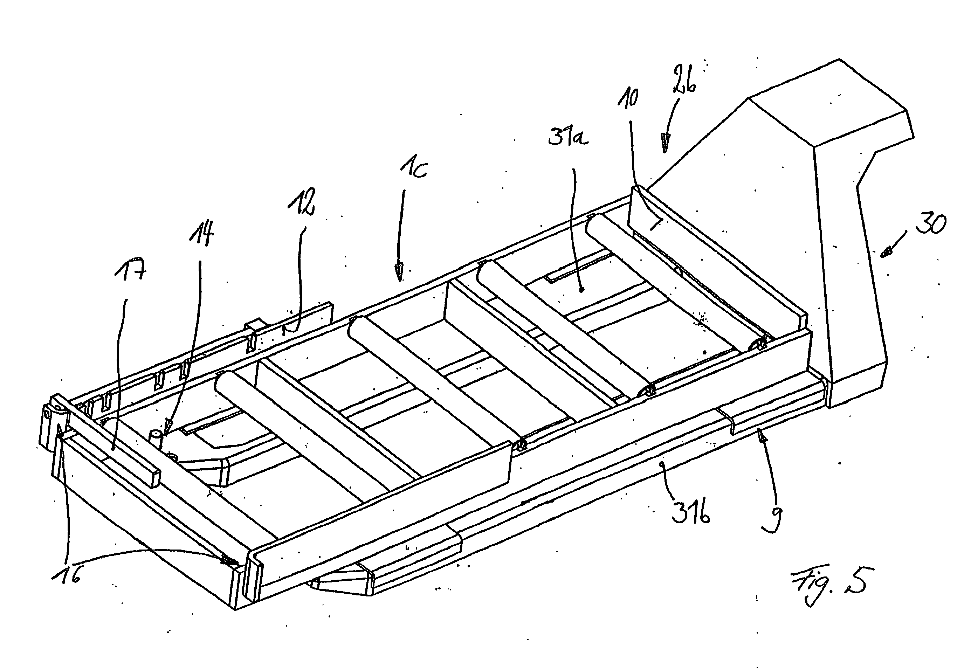

Die Figur 4 zeigt eine zweite Ausführungsform einer Batterieaufnahmeeinrichtung 1c für einen in der Figur 5 schematisch gezeigten Batteriewechselwagen 2b. Die Batterieaufnahmeeinrichtung 1c ist ebenfalls aus Längsstreben 3a, 3b und mehreren Querverbindungen 4a, 4b, 4c, 4d gebildet, wobei an den Längsstreben 3a, 3b mehrere Rollen 5a, 5b, 5c, 5d, 5e gelagert sind, die die Rollenbahn 6 bilden.

Die Querverbindung 4a bildet den Anschlag 10 für eine auf der Rollenbahn 6 angeordnete Batterie. Hierzu weist die Querverbindung 4a eine Höhe auf, die die Ebene der Rollenbahn 6 übersteigt.

An den Längsstreben 3a, 3b ist jeweils ein Bolzen 13a, 13b angeordnet, der die Funktion der Sicherungseinrichtung 14 gegen Verschieben der Batterieaufnahmeeinrichtung 1c in Querrichtung und gegen Verschieben der Batterieaufnahmeeinrichtung 1c in Längsrichtung des Gabelhubwagens 30 aufweist. Die Bolzen 13a, 13b sind hierbei - wie aus der Figur 7b zu erkennen ist - mit an den Gabeln 31a, 31b ausgebildeten Bohrungen 33 in Wirkverbindung bringbar.

An den Längsstreben 3a, 3b sind ebenfalls die Seitenbleche 11a, 11b angeordnet, die eine Höhe aufweisen, die die Ebene der Rollenbahn 6 übersteigt. Dadurch wird von den Seitenblechen 11a,11b eine Halteeinrichtung 12 zur Begrenzung der Bewegung einer auf der Rollenbahn 6 angeordneten Batterie in Querrichtung des Batterieaufnahmeeinrichtung s 1c begrenzt.

Die der Querverbindung 4d zugewandten Enden der Seitenbleche 11a, 11b sind mit einer nach Außen führenden Abrundung 15a, 15a versehen, wodurch Führungseinrichtungen 16a, 16b für die Batterie gebildet werden.

Das Seitenblech 11a ist weiterhin mit dem auf der Welle 18 zwischen den Arretierungspositionen verschiebbaren Riegel 17 versehen, wodurch Batterien mit unterschiedlichen Längen auf der Batterieaufnahmeeinrichtung 1c sicher gehalten werden können.

Die Sicherungseinrichtung 9 gegen Verschieben des Batterieaufnahmeeinrichtung 1c in Querrichtung des Gabelhubwagens 30 wird von mehreren Laschen 25a, 25b, 25c, 25d gebildet, die L-förmig ausgebildet sind. Die Laschen 25a, 25b sind hierbei an der Längsstrebe 3a angeordnet und voneinander beabstandet. Die Laschen 25c, 25d sind entsprechend an der Längsstrebe 3b angeordnet und voneinander beabstandet. Die Laschen 25a, 25b, 25c, 25d stehen bei auf den Gabeln 31a, 31b aufgesteckter Batterieaufnahmeeinrichtung 1c - wie in Figur 5 gezeigt ist - mit den Außenseiten der Gabeln 31a, 31b in Verbindung und verhindern ein Verschieben der Batterieaufnahmeeinrichtung 1c quer zu den Gabeln 31a, 31b.

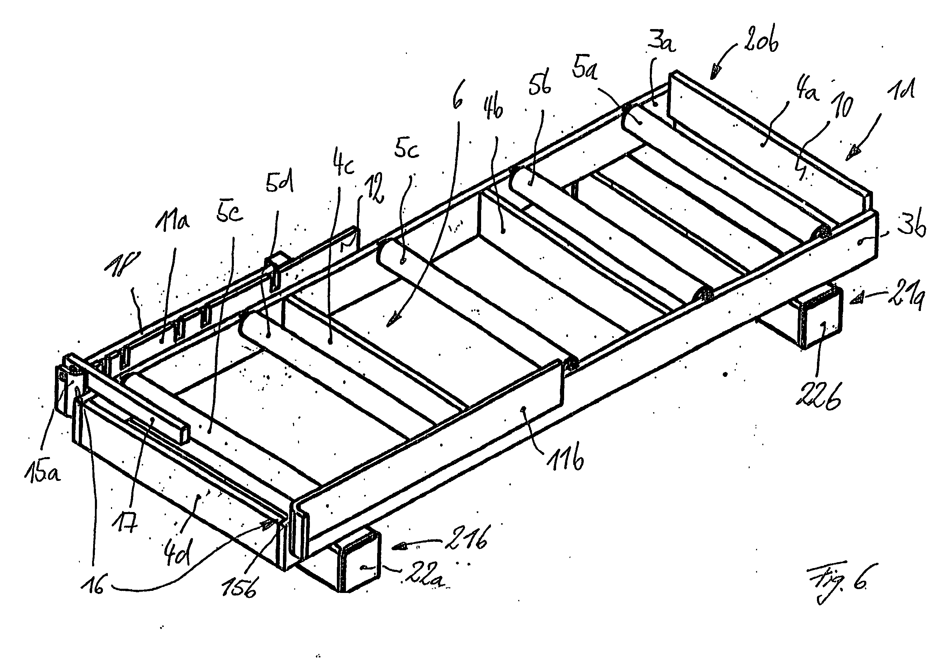

In der Figur 6 ist eine zweite Ausführungsform einer Ladestation 20b gezeigt. Die Batterieaufnahmeeinrichtung 1d der Ladestation 20b weist hierbei einen im wesentlichen identische Aufbau mit der Batterieaufnahmeeinrichtung 1c auf und besteht aus den Längsstreben 3a, 3b, den Querverbindungen 4a, 4b, 4c, 4d, den Rollen 5a, 5b, 5c, 5d, 5e und den Seitenblechen 11a, 11b, wobei am Seitenblech 11a der auf der Welle 18 zwischen den Arretierungspositionen verschiebbaren Riegel 17 angeordnet ist. Ein Unterschied zwischen der Batterieaufnahmeeinrichtung 1d und der Batterieaufnahmeeinrichtung 1c besteht dahingehend, daß an der Batterieaufnahmeeinrichtung 1d an den Längsstreben 11a, 11b keine Bolzen 14a, 14b und Laschen 25a, 25b, 25c, 25d angeordnet sind.

Die Batterieaufnahmeeinrichtung 1d ist mit zwei Stützelementen 21a, 21b verbunden, beispielsweise mittels Schweißen, die eine Abstützung der Batterieaufnahmeeinrichtung 1d auf dem Boden ermöglichen. Die Stützelemente21a, 21b sind hierbei als Vierkantrohre 22a, 22b ausgebildet.

Der in den Figuren 4 und 6 gezeigte Batterieaufnahmeeinrichtung 1c, 1d weist eine größeren Breite und eine größeren Länge als die in den Figuren 1 und 3 gezeigte Batterieaufnahmeeinrichtung 1 a, 1b auf. Die Batterieaufnahmeeinrichtung1 c, 1 d ist somit für größere Batterien als die Batterieaufnahmeeinrichtung 1a, 1b geeignet.

Die Figuren 7a, 7b zeigen einen üblichen als Handgabelhubwagen ausgebildeten Gabelhubwagen 30, der in Verbindung mit der Batterieaufnahmeeinrichtung 1a einen in der Figur 2 gezeigten Batteriewechselwagen 2a oder in zwei Verbindung mit der Batterieaufnahmeeinrichtung 1c einen in der Figur 5 gezeigten Batteriewechselwagen 2b bildet. Der Gabelhubwagen 30 weist zwei voneinander beabstandete, höhenverstellbare Gabeln 31a, 31b auf, wobei an den Gabelspitzen jeder Gabel 31a, 31b jeweils zwei Bohrungen 32, 33 ausgebildet sind, die voneinander in Querrichtung beabstandet sind. Die Bohrungen 32 dienen - wie aus Figur 2 dargestellt ist - bei aufgesteckter Batterieaufnahmeeinrichtung 1a zur Aufnahme der Bolzen 14a, 14b, wobei die Querverbindung 3a mit den Zentrierflächen 8 zwischen den Gabeln 31a, 32b angeordnet ist. Bei aufgesteckter Batterieaufnahmeeinrichtung 1c sind - wie aus der Figur 5 zu sehen ist - die Bolzen 14a, 14b der Batterieaufnahmeeinrichtung 1c in den Bohrungen 33 angeordnet. Die Laschen 25a, 25b, 25c, 25d stehen hierbei jeweils mit den Außenseiten der Gabeln 31a, 31b in Verbindung.

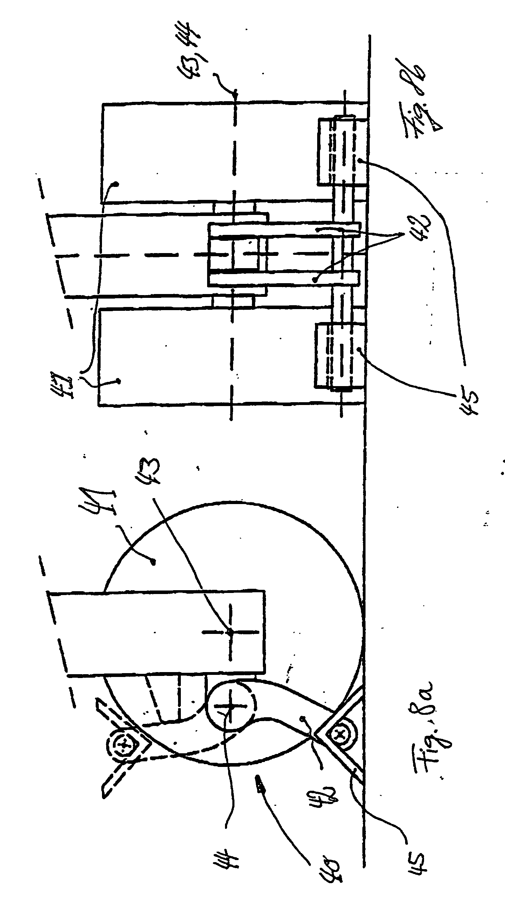

Wie aus den Figuren 8a und 8b ersichtlich ist, ist an dem als Handgabelhubwagen ausgebildeten Flurförderzeug 30 eine Feststelleinrichtung 40 vorgesehen. Der Handgabelhubwagen weist hierbei eine mit einer Deichsel in Wirkverbindung stehende, als Tandemrolle ausgebildetes lenkbares Rad 41 auf. Im Bereich des Rades 41 ist ein Hebel 42 um eine parallel zur Drehachse 43 des Rades 41 angeordnete Schwenkachse 44 schwenkbar angeordnet. An dem Hebel 42 ist ein beispielsweise winkelförmig ausgebildeter Feststellklotz 45 angeordnet, der bei in Bremsstellung befindlicher Feststelleinrichtung 40 mit dem Rad 41 in Wirkverbindung steht und ein Wegrutschen des Flurförderzeugs 30 während des Batteriewechsels verhindert. In der in der Figur 8a strichpunktiert dargestellten Lösestellung der Feststelleinrichtung 40 ist das Rad 41 frei drehbar.

## Patentansprüche

1. Batteriewechselsystem für den Batteriewechsel eines Flurförderzeugs mit einem batterieelektrischen Antrieb, insbesondere eines Flurförderzeugs mit einer seitlich aus dem Flurförderzeug herausbewegbaren Batterie, das einen Batteriewechselwagen aufweist, der von einem Flurförderzeug, insbesondere einem Gabeinubwagen, und einer an dem Flurförderzeug lösbar befestigten Batterieaufnahmeeinrichtung gebildet ist, wobei die Batterieaufnahmeeinrichtung eine Halteeinrichtung zum Halten der Batterie in Längsrichtung der Batterieaufnahmeeinrichtung aufweist, **dadurch gekennzeichnet, dass** die Halteeinrichtung einen Anschlag (10) und einen vom Anschlag in Längsrichtung der Batterieaufnahmeeinrichtung (1 a; 1 b; 1c; 1 d) beabstandeten, schwenkbaren Riegel (17) aufweist, wobei eine Querverbindung (4a) der Batterieaufnahmeeinrichtung (1a; 1b; 1c; 1d) den Anschlag (10) für die Batterie bildet und der Riegel (17) an einem der Querverbindung (4a) in Längsrichtung der Batterieaufnahmeeinrichtung (1a; 1b; 1c; 1d) gegenüberliegenden Bereich angeordnet ist.

2. Batteriewechselsystem nach Anspruch 1, **dadurch gekennzeichnet, dass** die Batterieaufnahmeeinrichtung (1 a; 1 c) auf die Gabeln (31 a, 31 b) eines Flurförderzeugs (30), insbesondere eines Gabelhubwagens, aufsteckbar ist.

3. Batteriewechselsystem nach Anspruch 2, **dadurch gekennzeichnet, dass** die Batterieaufnahmeeinrichtung (1 a, 1 c) auf den Gabeln (31 a, 31 b) des Flurförderzeugs (30) mittels einer Sicherungseinrichtung (9, 14) gegen Verschieben in Querrichtung und/oder mittels einer Sicherungseinrichtung (14) gegen Verschieben in Längsrichtung gesichert ist.

4. Batteriewechselsystem nach Anspruch 3, **dadurch gekennzeichnet, dass** an einer Querverbindung (4a) der Batterieaufnahmeeinrichtung (1a) Zentrierflächen (8) ausgebildet sind, die zwischen die Gabeln (31a, 31b) des Flurförderzeugs (30) eingreifen.

5. Batteriewechselsystem nach Anspruch 3, **dadurch gekennzeichnet, dass** an zumindest einer Längsstrebe (3a; 3b) der Batterieaufnahmeeinrichtung (1c) eine Lasche (25a, 25b, 25c, 25d) angeordnet ist, die mit der Gabel (31 a, 31 b) in Wirkverbindung bringbar ist.

6. Batteriewechselsystem nach einem der Ansprüche 3 bis 5, **dadurch gekennzeichnet, dass** an der Batterieaufnahmeeinrichtung (1a; 1c) mindestens ein Bolzen (13a; 13b) angeordnet ist, der mit einer an der Gabel (31a; 31b) des Flurförderzeugs (30) ausgebildeten Bohrung (32; 33) in Wirkverbindung bringbar ist.

7. Batteriewechselsystem nach Anspruch 6, **dadurch gekennzeichnet, dass** die Bohrung (32; 33) an der Spitze der Gabel (31a; 31b) des Flurförderzeugs (30) angeordnet ist.

8. Batteriewechselsystem nach einem der vorangegangenen Ansprüche, **dadurch gekennzeichnet, dass** das Flurförderzeug (30) mit einer Feststelleinrichtung (40) versehen ist.

9. Batteriewechselsystem nach Anspruch 8, **dadurch gekennzeichnet, dass** die Feststelleinrichtung (40) auf ein gelenktes Rad (41) des Flurförderzeugs (30) wirkt und als schwenkbarer Hebel (42) mit einem an dem Hebel (42) angeordneten Feststellklotz (45) ausgebildet ist, der mit dem Rad (41) in Wirkverbindung bringbar ist.

10. Batteriewechselsystem nach einem der Ansprüche 1 bis 9, **dadurch gekennzeichnet, dass** das Batteriewechselsystem eine Ladestation (20a, 20b) aufweist, die von einer zweiten Batterieaufnahmeeinrichtung (1b, 1d) gebildet ist, die mittels Stützelementen (21a, 21b) am Boden abgestützt ist.

11. Batteriewechselsystem nach Anspruch 10, **dadurch gekennzeichnet, dass** die zweite Batterieaufnahmeeinrichtung (1b; 1d) der Ladestation (20a; 20b) und die Batterieaufnahmeeinrichtung (1a, 1c) des Batteriewechselwagens (2a, 2b) einen im wesentlichen identischen Aufbau aufweisen.

12. Batteriewechselsystem nach Anspruch 10 oder 11, **dadurch gekennzeichnet, dass** die die Ladestation (20a, 20b) bildende Batterieaufnahmeeinrichtung (1b, 1c) mittels zwei Stützelementen (21a, 21b) am Boden abstützbar ist.

13. Batteriewechselsystem nach einem der Ansprüche 10 bis 12, **dadurch gekennzeichnet, dass** die Stützelemente (21a, 21b) als Vierkantrohre (22a, 22b) ausgebildet sind.

14. Batteriewechselsystem nach einem der vorangegangenen Ansprüche, **dadurch gekennzeichnet, dass** die Batterieaufnahmeeinrichtung (1a, 1b, 1 c, 1d) mit einer Rollenbahn (6) versehen ist.

15. Batteriewechselsystem nach einem der Ansprüche 1 bis 14, **dadurch gekennzeichnet, dass** der Riegel (17) an der Batterieaufnahmeeinrichtung (1a; 1b, 1 c, 1 d) längsverschiebbar angeordnet ist.

16. Batteriewechselsystem nach Anspruch 15, **dadurch gekennzeichnet, dass** der Riegel (17) auf einer in Längsrichtung der Batterieaufnahmeeinrichtung (1a; 1b; 1c, 1d) angeordneten Welle (18) längsverschiebbar gelagert ist.

17. Batteriewechselsystem nach Anspruch 15 oder 16, **dadurch gekennzeichnet, dass** für den Riegel (17) in Längsrichtung der Batterieaufnahmeeinrichtung (1a; 1b; 1c; 1d) mindestens eine Arretierungsposition (19a, 19b, 19c, 19d, 19f) vorgesehen ist.

18. Batteriewechselsystem nach Anspruch 17, **dadurch gekennzeichnet, dass** die Arretierungsposition (19a, 19b, 19c, 19d, 19f) als an einer Längsstrebe (3a) der Batterieaufnahmeeinrichtung (1 a; 1 b; 1 c; 1 d) angeordnete Ausnehmungen (20a, 20b, 20c, 20d, 20f) ausgebildet ist.

19. Batteriewechselsystem nach einem der Ansprüche 1 bis 18, **dadurch gekennzeichnet, dass** die Längsstreben (3a, 3b) der Batterieaufnahmeeinrichtung (1a; 1b; 1c;1d) eine Halteeinrichtung (12) zum Halten der Batterie in Querrichtung aufweisen.

20. Batteriewechselsystem nach Anspruch 19, **dadurch gekennzeichnet, dass** an den Längsstreben (3a, 3b) der Batterieaufnahmeeinrichtung (1a; 1b; 1c; 1d) Seitenbleche (11a; 11b) angeordnet sind, die eine Halteeinrichtung (12) zum Halten der Batterie in Querrichtung bilden.

21. Batteriewechselsystem nach einem der Ansprüche 1 bis 20, **dadurch gekennzeichnet, dass** an der Batterieaufnahmeeinrichtung (1a; 1b; 1c; 1d) Führungseinrichtungen (16) für die Batterie angeordnet sind.

22. Batteriewechselsystem nach Anspruch 21, **dadurch gekennzeichnet, dass** die Seitenbleche (11a; 11b) an einem dem Ende der Batterieaufnahmeeinrichtung (1a; 1b;1c; 1d) zugewandten Ende mit einer Abrundung (15a; 15b) versehen sind.

23. Batteriewechselsystem nach einem der vorangegangenen Ansprüche, **dadurch gekennzeichnet, dass** die Batterieaufnahmeeinrichtung (1a; 1b; 1c; 1d) als Schweißteil ausgebildet ist.

## Claims

1. Battery replacement system for replacing the battery of an industrial truck having a battery-powered drive, in particular of an industrial truck having a battery which can be moved laterally out of the industrial truck, which battery replacement system has a battery replacement carriage, which is formed by an industrial truck, in particular a fork-lift truck, and a battery-accommodating device which is fixed detachably to the industrial truck, the battery-accommodating device having a holding device for holding the battery in the longitudinal direction of the battery-accommodating device, **characterized in that** the holding device has a stop (10) and a locking bar (17), which can pivot and which is spaced apart from the stop in the longitudinal direction of the battery-accommodating device (1a; 1b; 1c; 1d), a transverse connecting piece (4a) of the battery-accommodating device (1a; 1b; 1c; 1d) forming the stop (10) for the battery, and the locking bar (17) being arranged in a region opposite the transverse connecting piece (4a) in the longitudinal direction of the battery-accommodating device (1a; 1b; 1c; 1d).

2. Battery replacement system according to Claim 1,
**characterized in that** the battery-accommodating device (1a; 1c) can be plugged onto the forks (31a, 31b) of an industrial truck (30), in particular of a fork-lift truck.

3. Battery replacement system according to Claim 2,
**characterized in that** the battery-accommodating device (1a, 1c) is secured on the forks (31a, 31b) of the industrial truck (30) against displacement in the transverse direction by means of a securing device (9, 14) and/or against displacement in the longitudinal direction by means of a securing device (14).

4. Battery replacement system according to Claim 3,
**characterized in that** centring faces (8) are formed on a transverse connecting piece (4a) of the battery-accommodating device (1a) and engage between the forks (31a, 31b) of the industrial truck (30).

5. Battery replacement system according to Claim 3,
**characterized in that** a lug (25a, 25b, 25c, 25d), which can be operatively connected to the fork (31a, 31b), is arranged on at least one longitudinal strut (3a, 3b) of the battery-accommodating device (1c).

6. Battery replacement system according to one of Claims 3 to 5, **characterized in that** at least one bolt (13a, 13b), which can be operatively connected to a drilled hole (32, 33) formed in the fork (31a, 31b) of the industrial truck (30), is arranged on the battery-accommodating device (1a, 1c).

7. Battery replacement system according to Claim 6, **characterized in that** the drilled hole (32, 33) is arranged at the tip of the fork (31a, 31b) of the industrial truck (30).

8. Battery replacement system according to one of the preceding claims, **characterized in that** the industrial truck (30) is provided with a locking device (40).

9. Battery replacement system according to Claim 8, **characterized in that** the locking device (40) acts on an articulated wheel (41) of the industrial truck (30) and is in the form of a pivotable lever (42) having a locking block (45), which is arranged on the lever (42) and can be operatively connected to the wheel (41).

10. Battery replacement system according to one of Claims 1 to 9, **characterized in that** the battery replacement system has a charging station (20a, 20b), which is formed by a second battery-accommodating device (1b, 1d) which is supported on the ground by means of supporting elements (21a, 21b).

11. Battery replacement system according to Claim 10, **characterized in that** the second battery-accommodating device (1b, 1d) of the charging station (20a, 20b) and the battery-accommodating device (1a, 1c) of the battery replacement carriage (2a, 2b) have an essentially identical design.

12. Battery replacement system according to Claim 10 or 11, **characterized in that** the battery-accommodating device (1b, 1d) forming the charging station (20a, 20b) can be supported on the ground by means of two supporting elements (21a, 21b).

13. Battery replacement system according to one of Claims 10 to 12, **characterized in that** the supporting elements (21a, 21b) are in the form of rectangular tubes (22a, 22b).

14. Battery replacement system according to one of the preceding claims, **characterized in that** the battery-accommodating device (1a, 1b, 1c, 1d) is provided with a roller conveyor (6).

15. Battery replacement system according to one of Claims 1 to 14, **characterized in that** the locking bar (17) is arranged on the battery-accommodating device (1a, 1b, 1c, 1d) such that it can be displaced longitudinally.

16. Battery replacement system according to Claim 15, **characterized in that** the locking bar (17) is mounted on a shaft (18), which is arranged in the longitudinal direction of the battery-accommodating device (1a, 1b, 1c, 1d), such that it can be displaced longitudinally.

17. Battery replacement system according to Claim 15 or 16, **characterized in that** at least one stopping position (19a, 19b, 19c, 19d, 19f) is provided for the locking bar (17) in the longitudinal direction of the battery-accommodating device (1a, 1b, 1c, 1d).

18. Battery replacement system according to Claim 17, **characterized in that** the stopping position (19a, 19b, 19c, 19d, 19f) is in the form of cutouts (20a, 20b, 20c, 20d, 20f) arranged in a longitudinal strut (3a) of the battery-accommodating device (1a; 1b; 1c; 1d).

19. Battery replacement system according to one of Claims 1 to 18, **characterized in that** the longitudinal struts (3a, 3b) of the battery-accommodating device (1a; 1b; 1c; 1d) have a holding device (12) for holding the battery in the transverse direction.

20. Battery replacement system according to Claim 19,
**characterized in that** lateral metal sheets (11a, 11b) are arranged on the longitudinal struts (3a, 3b) of the battery-accommodating device (1a; 1b; 1c; 1d) and form a holding device (12) for holding the battery in the transverse direction.

21. Battery replacement system according to one of Claims 1 to 20, **characterized in that** guide devices (16) for the battery are arranged on the battery-accommodating device (1a; 1b; 1c; 1d).

22. Battery replacement system according to Claim 21, **characterized in that** the lateral metal sheets (11a, 11b) are provided with a rounded-off portion (15a, 15b) at one end which faces the end of the battery-accommodating device (1a; 1b; 1c; 1d).

23. Battery replacement system according to one of the preceding claims, **characterized in that** the battery-accommodating device (1a; 1b; 1c; 1d) is in the form of a welded part.

## Revendications

1. Système de changement de batterie pour remplacer la batterie d'un chariot de manutention ayant un entraînement électrique par batterie, notamment un chariot de manutention ayant une batterie pouvant être ressortie latéralement du chariot de manutention, qui présente un chariot de changement de batterie qui est formé par un chariot de manutention, notamment un chariot élévateur à fourche, et par un dispositif de logement de batterie fixé de manière amovible sur le chariot de manutention, le dispositif de logement de batterie présentant un dispositif de retenue pour retenir la batterie dans la direction longitudinale du dispositif de logement de batterie, **caractérisé en ce que** le dispositif de retenue présente une butée (10) et un verrou (17) pivotant, espacé de la butée dans la direction longitudinale du dispositif de logement de batterie (1a ; 1b ; 1c ; 1d), une connexion transversale (4a) du dispositif de logement de batterie (1a ; 1b ; 1c ; 1d) formant la butée (10) pour la batterie et le verrou (17) étant disposé sur une partie opposée à la connexion transversale (4a) dans la direction longitudinale du dispositif de logement de batterie (1a ; 1b ; 1c ; 1d).

2. Système de changement de batterie selon la revendication 1, **caractérisé en ce que** le dispositif de logement de batterie (1a ; 1c) peut être posé sur les fourches (31a ; 31b) d'un chariot de manutention (30), notamment d'un chariot élévateur à fourche.

3. Système de changement de batterie selon la revendication 2, **caractérisé en ce que** le dispositif de logement de batterie (1a, 1c) est fixé sur les fourches (31a, 31b) du chariot de manutention (30) contre tout glissement dans la direction transversale au moyen d'un dispositif de fixation (9, 14) et/ou contre tout glissement dans la direction longitudinale au moyen d'un dispositif de fixation (14).

4. Système de changement de batterie selon la revendication 3, **caractérisé en ce que** des faces de centrage (8) sont réalisées sur une connexion transversale (4a) du dispositif de logement de batterie (1a), lesquelles viennent en prise entre les fourches (31a, 31b) du chariot de manutention (30).

5. Système de changement de batterie selon la revendication 3, **caractérisé en ce qu'**une patte (25a, 25b, 25c, 25d) est disposée sur au moins un longeron (3a, 3b) du dispositif de logement de batterie (1c), laquelle peut être amenée en liaison coopérante avec la fourche (31a, 31b).

6. Système de changement de batterie selon l'une quelconque des revendications 3 à 5, **caractérisé en ce qu'**au moins un goujon (13a, 13b) est disposé sur le dispositif de logement de batterie (1a, 1c), lequel peut être amené en liaison coopérante avec un alésage (32, 33) réalisé sur la fourche (31a, 31b) du chariot de manutention (30).

7. Système de changement de batterie selon la revendication 6, **caractérisé en ce que** l'alésage (32, 33) est disposé à la pointe de la fourche (31a, 31b) du chariot de manutention (30).

8. Système de changement de batterie selon l'une quelconque des revendications précédentes, **caractérisé en ce que** le chariot de manutention (30) est pourvu d'un dispositif de fixation (40).

9. Système de changement de batterie selon la revendication 8, **caractérisé en ce que** le dispositif de fixation (40) agit sur une roue dirigée (41) du chariot de manutention (30) et est réalisé sous forme de levier pivotant (42) avec un plot de fixation (45) disposé sur le levier (42), qui peut être amené en liaison coopérante avec la roue (41).

10. Système de changement de batterie selon l'une quelconque des revendications 1 à 9, **caractérisé en ce que** le système de changement de batterie présente un poste de chargement (20a, 20b) qui est formé par un deuxième dispositif de logement de batterie (1b, 1d), qui est supporté sur le sol au moyen d'éléments de support (21a, 21b).

11. Système de changement de batterie selon la revendication 10, **caractérisé en ce que** le deuxième dispositif de logement de batterie (1b, 1d) du poste de chargement (20a, 20b) et le dispositif de logement de batterie (1a, 1c) du chariot de changement de batterie (2a, 2b) présentent une construction substantiellement identique.

12. Système de changement de batterie selon la revendication 10 ou 11, **caractérisé en ce que** le dispositif de logement de batterie (1b, 1c) formant le poste de chargement (20a, 20b) peut être supporté sur le sol au moyen de deux éléments de support (21a, 21b).

13. Système de changement de batterie selon l'une quelconque des revendications 10 à 12, **caractérisé en ce que** les éléments de support (21a, 21b) sont réalisés sous forme de tubes carrés (22a, 22b).

14. Système de changement de batterie selon l'une quelconque des revendications précédentes, **caractérisé en ce que** le dispositif de logement de batterie (1a, 1b, 1c, 1d) est pourvu d'une piste à rouleaux (6).

15. Système de changement de batterie selon l'une quelconque des revendications 1 à 14, **caractérisé en ce que** le verrou (17) est disposé de manière à pouvoir coulisser longitudinalement sur le dispositif de logement de batterie (1a, 1b, 1c, 1d).

16. Système de changement de batterie selon la revendication 15, **caractérisé en ce que** le verrou (17) est monté de manière à pouvoir coulisser longitudinalement sur un arbre (18) disposé dans la direction longitudinale du dispositif de logement de batterie (1a, 1b, 1c, 1d).

17. Système de changement de batterie selon la revendication 15 ou 16, **caractérisé en ce que** l'on prévoit pour le verrou (17) dans la direction longitudinale du dispositif de logement de batterie (1a, 1b, 1c, 1d) au moins une position de blocage (19a, 19b, 19c, 19d, 19f).

18. Système de changement de batterie selon la revendication 17, **caractérisé en ce que** la position de blocage (19a, 19b, 19c, 19d, 19f) est réalisée sous la forme d'évidements (20a, 20b, 20c, 20d, 20f) prévus sur un longeron (3a) du dispositif de logement de batterie (1a ; 1b ; 1c ; 1d).

19. Système de changement de batterie selon l'une quelconque des revendications 1 à 18, **caractérisé en ce que** les longerons (3a, 3b) du dispositif de logement de batterie (1a ; 1b ; 1c ; 1d) présentent un dispositif de retenue (12) pour retenir la batterie dans la direction transversale.

20. Système de changement de batterie selon la revendication 19, **caractérisé en ce que** l'on prévoit sur les longerons (3a, 3b) du dispositif de logement de batterie (1a ; 1b ; 1c ; 1d) des tôles latérales (11a, 11b) qui forment un dispositif de retenue (12) pour retenir la batterie dans la direction transversale.

21. Système de changement de batterie selon l'une quelconque des revendications 1 à 20, **caractérisé en ce que** l'on prévoit sur le dispositif de logement de batterie (1a ; 1b ; 1c ; 1d) des dispositifs de guidage (16) pour la batterie.

22. Système de changement de batterie selon la revendication 21, **caractérisé en ce que** les tôles latérales (11a, 11b) sont pourvues à une extrémité tournée vers l'extrémité du dispositif de logement de batterie (1a ; 1b ; 1c ; 1d) d'un arrondi (15a, 15b).

23. Système de changement de batterie selon l'une quelconque des revendications précédentes, **caractérisé en ce que** le dispositif de logement de batterie (1a ; 1b ; 1c ; 1d) est réalisé sous la forme d'une pièce soudée.
